# EUROPÄISCHE PATENTANMELDUNG

(11) **EP 0 566 044 A1**
(43) Veröffentlichungstag der Anmeldung: **20.10.1993**
(21) Anmeldenummer: 93105880.4
(22) Anmeldetag: 08.04.1993
(51) Int. Cl.: C08J 9/12, B29C 67/22, B29C 67/24, C08L 75/04

(54) **Treibmittelkombination zum Aufschäumen eines Reaktionsgemisches**

(30) Priorität: 13.04.1992 DE 4212362
(71) Anmelder: Linde Aktiengesellschaft, D-65189 Wiesbaden (DE)
(72) Erfinder: Klane, Bernd, Dipl.-Ing., W-8000 München 70 (DE)
(74) Vertreter: Schaefer, Gerhard, Dr.

(57) **Zusammenfassung**

Das Verfahren betrifft die Herstellung aufgeschäumter Kunststoffe, insbesondere Polyurethan-Schaumstoffe, unter Verwendung von polymerisierenden Reaktionskomponenten, denen ein Treibmittel zugesetzt wird. Ziel der Erfindung ist, möglichst viel Gas als Treibmittel in den Reaktionskomponenten zu lösen. Erfindungsgemäß werden mehrere Gase jeweils bis nahe ihrer Sättigungskonzentration oder darüber hinaus bezogen auf Normaldruck zumindest einer Reaktionskomponente zugegeben. Die Menge an gelöstem Gas ist dabei erheblich höher als diejenige bei Verwendung eines einzigen Gases. Der Nachteil spontaner Aufschäumung noch vor der Polymerisationsreaktion wird dabei vermieden.

## Beschreibung

Die Erfindung betrifft ein Verfahren zur Herstellung aufgeschäumter Kunststoffe, insbesondere Polyurethan-Schaumstoffe, unter Verwendung von polymerisierenden Reaktionskomponenten, denen ein Treibmittel zugesetzt wird.

Zur Herstellung aufgeschäumter Kunststoffe sind verschiedene Verfahren bekannt, bei denen zwei oder mehr Reaktionskomponenten miteinander in Kontakt gebracht werden, woraufhin eine Polymerisationsreaktion eintritt. Zum Aufschäumen werden chemische Treibmittel eingesetzt, die durch chemische Reaktion ein Gas freisetzen, oder physikalische Treibmittel, d.h. Gase oder Flüssigkeiten, die sich gelöst und/oder verflüssigt in den Ausgangskomponenten befinden und wahrend der Polymerisationsreaktion verdampfen.

Eine Möglichkeit zur Herstellung von Polyurethan- Schaumstoffen ist das sogenannte RIM-Verfahren (Reaction Injection Molding). Beide Reaktionskomponenten, Polyol und Isocyanat, liegen in flüssiger Form vor und werden unter Hochdruck über zwei Leitungen mit Dosierpumpen einem Mischkopf zugeführt. Dort treffen sie unter Normaldruck aufeinander und die Polymerisationsreaktion setzt ein. Das Reaktionsgemisch wird in einen Werkzeughohlraum injiziert, wo die Aushärtung zum Formteil stattfindet. Den beiden Reaktionskomponenten sind meist Katalysatoren, Stabilisatoren und Additive zugesetzt. Das Aufschäumen des Polyurethans während der Polymerisationsreaktion läßt sich zum einen durch Zusatz von Wasser erreichen, das mit Isocyanat unter Freisetzung von Kohlendioxid reagiert, zum anderen durch Zusatz von tiefsiedenden Halogenalkanen (FCKW), die bei der stark exothermen Polymerisationsreaktion verdampfen und das Gemisch auftreiben (Ulmann's Enzyklopädie der Technischen Chemie, 4. Auflage, Band 19, Seiten 306ff, Seiten 327ff).

Aufgrund der umweltschädigenden Wirkung der FCKW's werden in jüngster Zeit andere gasförmige oder flüssige Stoffe erprobt, die beispielsweise der Polyolkomponente zugesetzt werden. Ein hoher bei Normaldruck gelöster Gasanteil in den Reaktionskomponenten verbessert deren Fließeigenschaften, führt zu einem gleichmäßigen Auftreiben des Gemisches und verursacht im Werkzeughohlraum einen günstigen Anpreßdruck an die Form. Ein solch hoher Gasgehalt hat außerdem ganz allgemein bei der Herstellung aufgeschäumter Kunststoffe den Vorteil, daß Schaumstoffe niedrigen Raumgewichts hergestellt werden können.

Prinzipiell lassen sich unter Hochdruck hohe Gasgehalte in einer Reaktionskomponente erzielen. Löst man jedoch zuviel Gas unter Hochdruck, tritt der größte Teil dieses Gases im Mischkopf bei Normaldruck aus dem entstehenden Gemisch sofort aus, noch bevor die Polymerisation einsetzen kann (spontanes Aufschäumen). Die entstehenden Gasblasen wirken sich auf den weiteren Produktionsverlauf negativ aus und das Gas ist für den späteren Aufschäumprozeß verloren. Sinnvoll ist demnach eine Gasbeladung, bei der beim Auftreffen der Reaktionskomponenten im Mischkopf aufeinander zunächst noch keine Gasfreisetzung erfolgt, sondern erst beim Einsetzen der exothermen Polymerisation Gas aufgrund abnehmender Löslichkeit freigesetzt wird.

Demzufolge ist es Aufgabe der vorliegenden Erfindung, zur Herstellung aufgeschäumter Kunststoffe ein Verfahren zu entwickeln, das es ermöglicht, die Menge an Treibmittel zu erhöhen, ohne den Nachteil der obengenannten spontanen Aufschäumung in Kauf nehmen zu müssen.

Diese Aufgabe wird erfindungsgemäß dadurch gelöst, daß mehrere Gase als Treibmittel jeweils bis nahe ihrer Sättigungskonzentration oder darüber hinaus bezogen auf Normaldruck zumindest einer der Reaktionskomponenten zugegeben werden. Gemäß erfindungsgemäßem Verfahren wird nicht mehr wie bisher nur ein Gas als Treibmittel verwendet, sondern mehrere Gase, wobei jedes dieser Gase bis zu seiner Sättigungskonzentration in eine Reaktionskomponente eingeleitet wird. Es zeigt sich, daß die Menge an insgesamt gelöstem Gas dadurch erheblich vergrößert werden kann. Unter Sättigungskonzentration ist hier immer diejenige gemeint, die sich für das in einer Reaktionskomponente gelöste Gas bei Normaldruck ergibt.

Vorteilhaft ist die Verwendung von chemisch inerten Gasen, da diese die Reaktionskomponenten chemisch nicht beeinflussen und auch beim Produktionsablauf gefahrlos gehandhabt werden können.

Löst man unter Hochdruck mehr Gas als es der Sättigungskonzentration bezogen auf Normaldruck entspricht, so tritt beispielsweise bei der RIM-Produktion der Nachteil auf, daß die beiden Reaktionskomponenten nicht mehr strahlenförmig aufeinander treffen, sondern aufgrund spontaner Aufschäumung wegen abnehmender Gaslöslichkeit bei sinkendem Druck die Reaktionskomponenten bereits schaumförmig den Mischkopf verlassen. Die Fließfähigkeit des Gemisches sinkt dadurch. Die Werkzeughohlformen können dann nicht mehr in reproduzierbarer Weise gefüllt werden, die Produktionsqualität nimmt ab. Beim erfindungsgemäßen Verfahren tritt dieser Nachteil nicht auf. Die Menge an insgesamt gelöstem Gas ist zwar deutlich höher, da aber jede Gaskomponente nur bis maximal ihrer Sättigungskonzentration bezogen auf Normaldruck (oder etwas darüber) in einer Reaktionskomponente gelöst ist, ist die Gefahr des spontanen Aufschäumens ausgeschaltet.

Selbstverständlich eignet sich das erfindungsgemäße Verfahren auch für andere Methoden zur Herstellung aufgeschäumter Kunststoffe.

Aufgeschäumte Kunststoffe werden häufig als thermisches Isoliermaterial verwendet. Erwünscht ist dafür eine geringe Dichte und eine geringe Wärmeleitfähigkeit des Isoliermaterials. Das geringe Raumgewicht des erfindungsgemäß hergestellten Kunststoffschaumes ist gleichbedeutend mit einem hohen Gasanteil bezogen auf den Festkörperanteil. Werden Gase geringer Wärmeleitfähigkeit verwendet, ist dieser hohe Gasanteil entscheidend für die günstige Wärmeleitzahl des Kunststoffschaumes.

Vorzugsweise kommen als inerte Gase für das erfindungsgemäße Verfahren Kohlendioxid, Stickstoff, Argon, Xenon, Krypton oder Schwefelhexafluorid zum Einsatz. Im Hinblick auf die erwähnte Wärmeleitfähigkeit schneidet Stickstoff am schlechtesten ab, gefolgt von Argon und Kohlendioxid. Zur Herstellung von Polyurethanschäumen in der Wärme-Kälte-Technik wird häufig Monofluortrichlormethan als Treibmittel verwendet. Eine vergleichbar geringe Wärmeleitfähigkeit weist Krypton auf, eine noch niedrigere Xenon.

Im folgenden soll ein Ausführungsbeispiel das erfindungsgemäße Verfahren näher erläutern.

Im Automobilbereich werden Weichschaumstoffe für Sitze und Rückenlehnen verwendet. Bei einem ersten Herstellungsverfahren mittels der genannten RIM-Methode wird ein Weichschaum aus einer Polyol/Isocyanat-Mischung hergestellt, wobei dem Isocyanat Wasser zugegeben wird, das mit dem Isocyanat eine chemische Reaktion unter Freisetzung von Kohlendioxid eingeht. Dieser chemisch aufgetriebene Schaum weist ein Raumgewicht von 35 g/l auf.

In einem zweiten Herstellungsverfahren wird erfindungsgemäß ein Gasgemisch aus drei Inertgasen, nämlich Kohlendioxid, Stickstoff und Argon zusätzlich in der Polyolkomponente gelöst. Das physikalisch gelöste Gasgemisch unterstützt hierbei das chemisch entstehende CO₂ beim Aufschäumen des polymerisierenden Reaktionsgemisches. Die Gasmischung wird zu diesem Zweck in die Hochdruckleitung des Polyols mit 160 bar eingedüst. Aufgrund des hohen Druckes lösen sich die zugemischten Gase unverzüglich. Mittels dieses erfindungsgemäßen Verfahrens lassen sich in diesem Ausführungsbeispiel ca. 3 Gew.% Gas in der Polyolkomponente lösen. Diese Gasmenge bleibt bis zur Polymerisation der Reaktionskomponenten im Polyol gelöst. Wird hingegen nur ein einziges Inertgas in der genannten Konzentration unter Hochdruck in die Polyolkomponente eingebracht, so kommt es zu der bereits beschriebenen nachteiligen spontanen Aufschäumung vor der Polymerisationsreaktion.

Die drei zugegebenen Inertgase bleiben beim Austreten des Gemisches im Mischkopf nahezu vollständig im Gemisch gelöst, verbessern dessen Fließeigenschaften und treiben das Gemisch während der stark exothermen Polymerisationsreaktion auf, da die Löslichkeit der zugegebenen Gase mit steigender Temperatur schnell abnimmt. Der erfindungsgemäß hergestellte Weichschaum weist ein Raumgewicht von 30 g/l auf. Dies entspricht einer Raumgewichtsreduzierung von 14 % im Vergleich zum chemisch aufgetriebenen Kunststoff.

## Patentansprüche

1. Verfahren zur Herstellung aufgeschäumter Kunststoffe, insbesondere polyurethan-Schaumstoffe, unter Verwendung von polymerisierenden Reaktionskomponenten, denen ein Treibmittel zugesetzt wird, **dadurch gekennzeichnet,** daß mehrere Gase als Treibmittel jeweils bis nahe ihrer Sättigungskonzentration oder darüber hinaus bezogen auf Normaldruck zumindest einer Reaktionskomponente zugegeben werden.

2. Verfahren nach Anspruch 1, dadurch gekennzeichnet, daß als Treibmittel inerte Gase verwendet werden.

3. Verfahren nach einem der Ansprüche 1 oder 2, dadurch gekennzeichnet, daß als Treibmittel Gase geringer Wärmeleitfähigkeit verwendet werden.

4. Verfahren nach Anspruch 2, dadurch gekennzeichnet, daß als inerte Gase Kohlendioxid, Stickstoff, Argon, Xenon, Krypton oder Schwefelhexafluorid verwendet werden.
